## Europäisches Patentamt
## European Patent Office
## Office européen des brevets

(19)

(11) Veröffentlichungsnummer : **0 125 579**
**B1**

(12) **EUROPÄISCHE PATENTSCHRIFT**

(45) Veröffentlichungstag der Patentschrift :
26.04.89

(21) Anmeldenummer : 84105038.8

(22) Anmeldetag : 04.05.84

(51) Int. Cl.⁴ : **C 08 G 18/10, C 08 G 18/62,**
**C 08 G 18/58, C 08 G 18/36**

(54) Polyurethan-Prepolymere auf Basis oleochemischer Polyole, ihre Herstellung und Verwendung.

(30) Priorität : **11.05.83 DE 3317194**

(43) Veröffentlichungstag der Anmeldung :
**21.11.84 Patentblatt 84/47**

(45) Bekanntmachung des Hinweises auf die Patenterteilung : **26.04.89 Patentblatt 89/17**

(84) Benannte Vertragsstaaten :
**AT BE CH DE FR GB IT LI LU NL SE**

(56) Entgegenhaltungen :
**DD--A-- 132 018**
**DE--A-- 1 520 448**
**DE--A-- 1 645 564**
**US--A-- 3 424 766**
**US--A-- 4 124 609**
**Die Akte enthält technische Angaben, die nach dem Eingang der Anmeldung eingereicht wurden und die nicht in dieser Patentschrift enthalten sind.**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Kluth, Hermann**
**Degerstrasse 48**
**D-4000 Düsseldorf 1 (DE)**
Erfinder : **Meffert, Alfred, Dr.**
**Marie-Curie-Strasse 10**
**D-4019 Monheim (DE)**

EP 0 125 579 B1

Jouve, 18, rue St-Denis, 75001 Paris, France

# EP 0 125 579 B1

**Beschreibung**

Die Erfindung liegt auf dem Gebiet der Polyurethan-Prepolymeren. Sie betrifft Produkte, die zu Polyurethanschäumen weiterverarbeitet werden können und die sich insbesondere zur Formulierung von feuchtigkeitshärtenden Einkomponenten-Polyurethanschäumen eignen.

Polyurethan-Prepolymere sind seit Jahren bekannt. Neben zahlreichen Anwendungen auf dem Klebstoffgebiet werden sie in steigendem Maße zur Formulierung von Polyurethanschäumen verwendet. Derartige Schäume haben aufgrund ihrer isolierenden Eigenschaften steigende Bedeutung im Bausektor erlangt. Bei dieser Anwendung werden sogenannte Einkomponenten-Polyurethanschäume bevorzugt. Dabei handelt es sich um Mischungen aus Polyurethan-Prepolymeren, Verflüssigern, Beschleunigern, Treibmitteln und Hilfsstoffen, die geschützt gegen Feuchtigkeit in Druckgefäßen in den Handel gebracht werden und bei Berührung mit Wasser oder Wasserdampf zu festen Schäumen aushärten. So wird in der deutschen Offenlegungsschrift 20 45 852 vorgeschlagen, zur Herstellung eines derartigen Produktes ein Polyurethan-Prepolymer auf Basis von Toluylendiisocyanat oder rohen Diphenylmethandiisocyanat und eines Polyols mit einem Molekulargewicht von mindestens 300 herzustellen.

Die deutsche Offenlegungsschrift DE-A-27 58 114 schlägt für den gleichen Verwendungszweck Polyurethan-Prepolymere auf Basis von tertiäre Aminogruppen enthaltenden Polyestern und/oder Polyetherpolyolen mit 2-8 Hyroxylgruppen vor.

Die deutsche Offenlegungsschrift DE-A-1 645 564 beschreibt ein Verfahren zur Herstellung gut trocknender Bindemittel. Bei diesen Bindemitteln handelt es sich um Polyurethane, die aus Polyisocyanaten und partiell epoxidierten Ölen hergestellt werden, sich durch kürzere Trocknungszeiten auszeichen und gewünschtenfalls in wasserlöslicher bzw. in wasseremulgierbarer Form erhalten werden können. In allen Beispielen wird (gemäß Unteranspruch 6) bei der Urethanisierung die Isocyanatkomponente im Unterschuß eingesetzt. Die Gesamtfunktionalität (Zahl der OH- und Epoxidgruppen pro Molekül) ist in allen Beispielen (gemäß Unteranspruch 2) < 2. Bei den beschriebenen Substanzen handelt es sich eindeutig nicht um Prepolymere mit Isocyanat-Endgruppen. Nur das Vorliegen überschüssiger Isocyanatgruppen ermöglicht eine weitere Vernetzung und damit ein Aushärten der Polyurethan-Prepolymeren bei Zutritt von Luftfeuchtigkeit. Aus dieser Druckschrift kann der Fachmann auch nicht die besondere Eignung von Polyurethan-Prepolymeren mit Isocyanat-Endgruppen auf Basis von oleochemischen Polyolen mit einem Restepoxidsauerstoff-Gehalt von 1 bis 4 Gew.-% entnehmen.

Die Patentschrift DD-B-132 018 beschreibt ein Verfahren zur Herstellung Hydroxylgruppen-haltiger Ester von Fettsäuren, die als Polyolkomponenten in Polyurethanen dienen. Bei diesen Estern handelt es sich um epoxidierte natürliche Fette und Öle, bei denen die Epoxidringe durch Umsetzung mit Polyetheralkoholen geöffnet werden. Zur Erhöhung der Lagerstabilität des Polyols wird ein Restepoxidgehalt von ca. 1 % des ursprünglichen Epoxidgehaltes, im wesentlichen durch Zumischen nicht-ringge-öffneter Ausgangsprodukte, aufrechterhalten. Ein irgendwie gearteter positiver Einfluß eines Restepoxid-Gehaltes auf die Eigenschaften des Polyurethans ist der Druckschrift nicht zu entnehmen.

Die bisher bekannten Polyurethan-Prepolymeren haben den Nachteil, daß sie konventionelle Treibmittel, wie z. B. Dichlordifluormethan in nur unzureichender Menge lösen. Dies führt zu Nachteilen beim Verschäumen der Mischungen, insbesondere bei Leichtschäumen für Isolierzwecke. Ein weiterer Nachteil ist, daß die den Prepolymeren zugrunde liegenden Polyole Folgeprodukte des Erdöls sind, sich also nicht von nachwachsenden, erneuerbaren, natürlichen Rohstoffen ableiten. Es besteht somit Bedarf nach Polyurethan-Prepolymeren auf Basis oleochemischer Polyole, die sich von natürlichen Rohstoffen ableiten mit einer verbesserten Löslichkeit für Fluorchlorkohlenwasserstoffe.

Aufgabe der Erfindung ist somit die Bereitstellung neuer Polyurethan-Prepolymerer auf Basis von oleochemischen Rohstoffen, die sich von epoxydierten Triglyceriden eines wenigstens anteilsweise olefinisch ungesättigte Fettsäuren enthaltenden Fettsäuregemisches ableiten. Eine weitere Aufgabe der Erfindung ist die Schaffung eines Verfahrens zur Herstellung der Polyurethan-Prepolymeren. Die Erfindung betrifft weiterhin die Verwendung der Prepolymeren auf Basis oleochemischer Polyole bei der Herstellung von Polyurethanschäumen.

Gegenstand der Erfindung sind somit in einer ersten Ausführungsform Polyurethan-Prepolymere mit endständigen Isocyanatgruppen

— aufgebaut aus einem stöchiometrischen Überschuß an aromatischen Isocyanaten mit im Mittel 2-4 Isocyanatgruppen pro Molekül

— und einer Polyolkomponente

dadurch gekennzeichnet, daß die als Polyolkomponente

— oleochemische Polyole enthalten,

— die Epoxidgruppen aufweisen und

— deren Gesamtfunktionalität (OH- und Epoxidgruppen) zwischen 2,0 und 4,0 liegt und

— die durch partielle Ringöffnung epoxidierter Triglyceride eines wenigstens anteilsweise olefinisch ungesättigte Fettsäuren enthaltenden Fettsäuregemisches mit ein- oder mehrwertigen Alkoholen unter Bewahrung eines Restepoxidgehaltes von 1-4 Gew.-% Epoxidsauerstoff hergestellt worden sind, in dem die Reaktion durch Neutralisation des sauren Katalysators und/oder durch Abdestillieren des im Überschuß eingesetzten Alkohols nach einem Umsatz von 20-80 mol-% der Epoxidgruppen abgebrochen wird.

2

Ein weiterer Gegenstand der Erfindung ist die Herstellung der Polyurethan-Prepolymeren. Schließlich ist Gegenstand der Erfindung die Verwendung der neuen Polyurethan-Prepolymeren, gewünschtenfalls in Abmischung mit üblichen Beschleunigern, Verflüssigern, Treibmitteln, Farbstoffen und/oder Stabilisatoren als Ausgangsstoffe bei der Polyurethanschaumstoffherstellung. Den erfindungsgemäßen Polyurethan-Prepolymeren liegen aromatische Isocyanate mit 2-4 Isocyanatgruppen zugrunde. Geeignet sind sowohl Produkte die alle Isocyanatgruppen an einem aromatischen Ring oder an mehreren miteinander in Konjugation stehenden aromatischen Ringen enthalten, wie auch solche Produkte, die die Isocyanatgruppen an mehreren über Alkylen-, wie z. B. Methylengruppen, miteinander verbundenen Ringen enthalten. Geeignet sind z. B. 2,4-Toluylendiisocyanat und insbesondere 4,4'-Diphenyl-methandiisocyanat. Bevorzugt sind Mischungen von 4,4'-Diphenylmethandiisocyanaten mit höherfunktionellen Isocyanaten, also z. B. mit substituierten Diphenyl-methandiisocyanaten, welche als Substituenten einen weiteren, isocyanatgruppentragenden aromatischen Ring aufweisen. Besonders bevorzugt sind handelsübliche flüssige Rohmischungen von Diphenylmethandiisocyanat, die noch oligomere Polyphenylenpolymethylenpolyisocyanate enthalten. Unter diesen flüssigen Rohmischungen sind besonders solche geeignet, die eine mittlere Funktionalität von 2,0-3,0, insbesondere von 2-2,5, Isocyanatgruppen pro Molekül aufweisen. Es ist dem Polyurethan-Fachmann bekannt, daß die Vernetzungsdichte und damit Härte und Sprödigkeit der Polyurethane mit der Funktionalität der Isocyanatkomponente oder auch des Polyols zunimmt. Es sei hier auf die allgemeine Fachliteratur verwiesen, z. B. auf die Monographie von Saunders and Frisch « Polyurethanes, Chemistry and Technology », Band XVI der Serie « High Polymers », Interscience Publishers, New York-London, Teil I (1962) und Teil 2 (1964).

Die erfindungsgemäßen Polyurethan-Prepolymeren weisen als Polyolkomponente ein oleochemisches Polyol auf. Unter oleochemischen Polyolen werden im Sinne der Erfindung die Umsetzungsprodukte epoxydierter Triglyceride von zumindest anteilsweise ethylenisch ungesättigte Fettsäuren enthaltenden Fettsäuregemischen mit Alkoholen verstanden. Nach einer ersten Ausführungsform der Erfindung werden Prepolymere hergestellt auf Basis oleochemischer Polyole, die außer Hydroxylgruppen noch einen Restgehalt an Epoxidgruppen aufweisen.

Die Herstellung dieser Ausgangsstoffe ist nicht Gegenstand der vorliegenden Erfindung. Sie kann vorzugsweise nach dem Verfahren der europäischen Patentschrift EP-B-111 626 erfolgen. Nach dem dort beschriebenen Verfahren erhält man Ausgangsstoffe für die erfindungsgemäßen Prepolymeren, indem man epoxydierte Triglyceride in Gegenwart saurer Katalysatoren mit einem Überschuß an Alkoholen bei Temperaturen zwischen 50 und 110° der Ringöffnung unterwirft und nach dem ein Umsatz von 20-80 mol.-% der Epoxidgruppen erreicht ist, die Reaktion durch Neutralisation des sauren Katalysators und/oder durch Abdestillieren des im Überschuß eingesetzten Alkohols abbricht.

Ausgangsstoffe für oleochemischen Polyole der erfindungsgemäßen Prepolymeren sind aus zahlreichen tierischen oder pflanzlischen Triglyceriden herstellbar ; so z. B. aus folgenden Fetten und Ölen (geordnet nach steigender Ausgangsiodzahl) : Rindertalg, Palmöl, Schmalz, Rizinusöl, Erdnußöl, Rüböl sowie bevorzugt Baumwollsaatöl, Sojabohnenöl, Tranöl, Sonnenblumenöl, Leinöl. Besonders bevorzugte Stoffe sind epoxydiertes Sojabohnenöl mit Epoxidzahl 5,8-6,5, epoxydiertes Sonnenblumenöl mit Epoxidzahl 5,6-6,6, epoxydiertes Leinöl mit Epoxidzahl 8,2-8,6, sowie epoxydiertes Tranöl mit Epoxidzahl 6,3-6,7.

Die genannten epoxydierten Triglyceride werden mit Alkoholen zu den erfindungsgemäß geeigneten oleochemischen Polyolen teilweise ringgeöffnet. Hierzu sind nach einer ersten Ausführungsform monofunktionelle Alkohole mit 1-12 C-Atomen geeignet. Bevorzugt sind monofunktionelle primäre Alkohole wie z. B. Methanol, Ethanol, Propanol und deren höhere Homologue. Weiterhin sind geeignet monofunktionelle sekundäre Alkohole wie Isopropanol. Auch ungesättigte monofunktionelle Alkohole wie Allylalkohol oder cyclische monofunktionelle Alkohole wie Cyclohexanol oder Benzylalkohol können eingesetzt werden. Nach einer weiteren Ausführungsform sind auch difunktionelle, primäre oder sekundäre Alkohole geeignet. Hier sind Ethylenglykol und Propylenglykol sowie deren höhere Homologe mit bis zu 8 C-Atomen bevorzugt. Weiterhin können verwendet werden Butandiol, Pentandiole, z. B. Neopentylglykol und die Ringöffnungsprodukte von Olefinoxiden mit bis zu 8 C-Atomen. Aus dem Gesagten ergibt sich, daß eine große Anzahl von Epoxidgruppen und Hydroxylgruppen tragende oleochemische Polyole als Ausgangsmaterialien für die erfindungsgemäßen Prepolymeren geeignet sind. Einschränkende Voraussetzungen sind lediglich, daß die Gesamtfunktionalität, das ist die Anzahl der Hydroxylgruppen und der Epoxidgruppen, zwischen 2 und 4 funktionelle Gruppen pro Molekül beträgt und die Epoxidzahl in einem Bereich von 1 bis 4,0 Gew.-% Epoxidsauerstoff liegt. Es ist weiterhin bevorzugt, daß die OH-Zahl in einem Bereich von 50 bis 200, vorzugsweise von 65 bis 160 liegt.

Die erfindungsgemäßen Polyurethan-Prepolymeren weisen einen Gehalt an freien Isocyanatgruppen auf. Es ist bevorzugt Polyurethan-Prepolymere mit 5-25 Gew.-% an Isocyanatgruppen herzustellen. Besonders bevorzugt sind Polyurethan-Prepolymere mit 10-20 Gew.-% freien Isocyanatgruppen jeweils bezogen auf das Gewicht des Prepolymeren.

Es sind weiterhin Polyurethan-Prepolymere bevorzugt, die aromatische Diisocyanate und Polyolkomponente in Mengen enthalten, die einem Ausgangsmolverhältnis OH— : Isocyanatgruppen zwischen 1 : 4 und 1 : 11 entsprechen.

Die Umsetzung zwischen Polyol und Isocyanat erfolgt üblicherweise im Temperaturbereich zwischen 0 und 100 °C, vorzugsweise Raumtemperatur bis 50 °C.

3

Zur Herstellung der Produkte werden die Ausgangstoffe unter Rühren gemischt. Dies kann in üblichen Reaktions-gefäßen geschehen. Um erfindungsgemäße Polyurethan-Prepolymere für die Verwendung in reaktiven Einkomponenten-Polyurethanschäumen herzustellen, ist es zweckmäßig, oleochemisches Polyol und Isocyanat zusammen mit den anderen Komponenten, also Verflüssigern, Beschleunigern und Treibgas in einer trockenen Druckapparatur, vorzugsweise einer Aerosoldose zu mischen. Dabei können gleichzeitig oder anschließend weitere Hilfsstoffe zugegeben werden. Es ist auch möglich, das Treibgas erst nach Beendigung der Herstellung des Prepolymeren hinzuzuspeisen.

Die erfindungsgemäßen Polyurethan-Prepolymeren sind für eine Vielzahl von Anwendungen auf dem Klebstoffgebiet geeignet. Bevorzugt ist jedoch ihre Verwendung in Zubereitungen zur Polyurethanschaumherstellung. Derartige Zubereitungen (1-Komponenten-Systeme) bestehen aus Polyurethan-Prepolymeren, Katalysatoren (Beschleunigern), Verflüssigern (Weichmacher) und weiteren Hilfsmitteln, die zusammen mit Treibgasen unter Druck in Aerosoldosen angeboten werden. Beim Austragen und Entspannen der Masse über ein Druckventil wird dann unter Verdampfen des Treibmittels ein sogenannter Froth-Schaum gebildet, der durch Einwirkung der Umgebungsfeuchtigkeit über die noch freien Isocyanatgruppen vernetzt und in vielfältiger Weise z. B. als Konstruktionswerkstoff eingesetzt werden kann.

Bei der Verwendung in derartigen Polyurethanschaumzubereitungen können die erfindungsgemäßen Polyurethan-Prepolymeren zusammen mit bekannten Katalysatoren bzw. Katalysatorsystemen eingesetzt werden. Es sei hier auf die zitierte Literaturstelle Saunders and Frisch a.a.o. Seite 45 ff. verwiesen. Besonders zu nennen sind hier tertiäre Amine von der Art aliphatischer tertiärer Amine, N-substituierter Morpholine bzw. N,N'-substituierter Piperazine.

Die erfindungsgemäßen Polyurethan-Prepolymeren können in Polyurethanschaumzubereitungen weiterhin mit üblichen Verflüssigern oder Weichmachern, insbesondere flammhemmenden Weichmachern verwendet werden. Es ist üblich, derartige Verflüssiger oder Weichmacher in Mengen von 25-35 Gew.-% — bezogen auf oleochemische Polyole und Hilfsstoffe — einzusetzen. Übliche Verflüssiger, die die Flammfestigkeit von Polyurethanschäumen vergrössern, sind Phosphor- und/oder Halogenatome enthaltende Verbindungen wie Diphenylkresylphosphat, Tris-2-chlorethylphosphat, Tris-2-chlorpropylphosphat und Tris-2,3-dibrompropylphosphat. Zusätzlich können als Flammschutzmittel beispielsweise verwendet werden : Chlorparaffine, Halogenphosphite, Ammoniumphosphat und halogen- und phosphorhaltige Harze.

Zur Herstellung von Polyurethanschaumzubereitungen auf Basis der erfindungsgemäßen Polyurethan-Prepolymeren werden weiterhin übliche Treibmittel zugesetzt. Ein besonderer Vorteil der erfindungsgemäßen Produkte liegt in ihrer verbesserten Löslichkeit gegenüber solchen Treibmitteln. So wird zum Beispiel Dichlordifluormethan, welches in üblichen Polyurethan-Prepolymeren, z. B. auch solchen auf Basis Rizinusöl, bei Raumtemperatur unter Eigendruck nur zu knapp 20 % löslich ist, zu 25-28 % von den erfindungsgemäßen Polyurethan-Prepolymeren gelöst. Als Treibmittel sind Stoffe geeignet, die gegenüber den anderen Komponenten des Reaktionsgemisches inert sind. Bevorzugt sind beispielsweise halogenierte Kohlenwasserstoffe mit Siedepunkten unterhalb von 30 °C bei Normalbedingungen. Geeignet sind beispielsweise Monochlordifluormethan, Dichlormonofluormethan, Dichlordifluormethan und/oder Trichlorfluormethan. Geeignet sind weiterhin leicht flüchtige Kohlenwasserstoffe, beispielsweise Propan, Isobutan und/oder Dimethylether bzw. Gemische aus den halogenierten Kohlenwasserstoffen und leicht flüchtigen nicht-halogenierten Kohlenwasserstoffen.

Als weitere Hilfsstoffe können bei der erfindungsgemässen Verwendung der Polyurethan-Prepolymeren in Polyurethanschaumzubereitungen Zellregulatoren, Schaumstabilisatoren und weitere Stabilisatoren, z. B. Stabilisatoren gegen fotochemischen und/oder hydrolytischen Abbau zugegen sein. Weiterhin können Farbstoffe zusammen mit den Polyurethan-Prepolymeren verwendet werden.

Die aus den Polyurethan-Prepolymeren herstellbaren Polyurethanschäume zeigen vorteilhafte technische Eigenschaften. Insbesondere zeigen sie bei Prüfung nach den « Richtlinien zur Prüfung von Einkomponenten-Polyurethan-Schaumstoffen » des Süddeutschen Kunststoffzentrums vom Juni 1980 (s. B. 7.1/680) vorteilhafte Eigenschaften.

Beispiele

Als oleochemische Polyole wurden die in Tabelle I aufgelisteten, nach der europäischen Patentschrift EP-B-111 626 hergestellten Polyole verwendet :

(Siehe Tabellen Seite 5 ff.)

4

## Tabelle I

### Oleochemische Polyole

| Nr.: | Ausgangstriglycerid (Epoxidzahl in Gew.% Epoxidsauerstoff) | Ringöffnung mit: | Rest-Epoxid-zahl (Gew.% Epoxid-sauerstoff) | Hydroxylzahl (berechnet) | OH-Äquivalent-gewicht |
|---|---|---|---|---|---|
| 1 | Epox. Sojaöl (6,1) | Methanol | 3,35 | 85,9 | 652,9 |
| 2 | Epox. Sojaöl (6,1) | Methanol | 1,68 | 138,1 | 406,2 |
| 3 | Epox. Sojaöl (6,1) | Ethanol | 3,91 | 65,3 | 858,9 |
| 4 | Epox. Sojaöl (6,1) | Ethanol | 2,56 | 105,6 | 531,4 |
| 5 | Epox. Sojaöl (6,1) | Ethanol | 1,58 | 134,8 | 416,2 |
| 6 | Epox. Sojaöl (6,1) | Isopropanol | 2,75 | 95,6 | 587,1 |
| 7 | Epox. Sojaöl (6,1) | Methanol | 1,11 | 155,9 | 359,8 |
| 8 | Epox. Leinöl (8,6) | Methanol | 3,45 | 154,0 | 364,2 |

EP 0 125 579 B1

EP 0 125 579 B1

Tabelle II

| Polyol Nr.: | | 1 | 2 | 3 | 4 | 5 | 6 | 7 | 8 |
|---|---|---|---|---|---|---|---|---|---|
| Äquivalente | OH | 0,102 | 0,164 | 0,077 | 0,125 | 0,160 | 0,113 | 0,185 | 0,183 |
| | NCO | 0,922 | 0,922 | 0,922 | 0,922 | 0,922 | 0,922 | 0,922 | 0,922 |
| Molverhältnis NCO/OH | | 9,04:1 | 5,62:1 | 11,97:1 | 7,38:1 | 5,76:1 | 8,16:1 | 4,98:1 | 5,04:1 |

Herstellung der Polyurethanschaumzubereitungen

Bei Raumtemperatur wurden gemischt :

| | |
|---|---|
| Oleochemisches Polyol | 66,6 g |
| Tris-(1-chlor-isopropyl)-phosphat | 30,0 g |
| Silikontensid | 3,0 g |
| Bis-(N,N-Dimethylaminoethyl)-ether | 0,4 g |
| Diphenylmethandiisocyanat (Desmodur 44V10, Bayer) | 125,0 g |
| Dichlordifluormethan | 120,0 g |

Alle Mischungen ließen sich zu ausgezeichneten Polyurethanschäumen verarbeiten. Das Treibmittel Dichlordifluormethan war zumindest größtenteils gelöst.

Das Verhältnis OH-Gruppen zu NCO-Gruppen ist in Tabelle II aufgelistet.

## Patentansprüche

1. Polyurethan-Prepolymere mit endständigen Isocyanatgruppen
— aufgebaut aus einem stöchiometrischen Überschuß an aromatischen Isocyanaten mit im Mittel 2-4 Isocyanatgruppen pro Molekül
— und einer Polyolkomponente
dadurch gekennzeichnet, daß sie als Polyolkomponente
— oleochemische Polyole enthalten,
— die Epoxidgruppen aufweisen und
— deren Gesamtfunktionalität (OH- und Epoxidgruppen) zwischen 2,0 und 4,0 liegt und
— die durch partielle Ringöffnung epoxidierter Triglyceride eines wenigstens anteilsweise olefinisch ungesättigte Fettsäuren enthaltenden Fettsäuregemisches mit ein- oder mehrwertigen Alkoholen unter Bewahrung eines Restepoxidgehaltes von 1-4 Gew.-% Epoxidsauerstoff hergestellt worden sind, in dem die Reaktion durch Neutralisation des sauren Katalysators und/oder durch Abdestillieren des im Überschuß eingesetzten Alkohols nach einem Umsatz von 20-80 mol-% der Epoxidgruppen abgebrochen wird.

2. Polyurethan-Prepolymere nach Anspruch 1, dadurch gekennzeichnet, daß sie als aromatische Isocyanate mehrkernige aromatische Isocyanate der Funktionalität 2,0-3,0, insbesondere 2,0-2,5 enthalten.

3. Polyurethan-Prepolymere nach den Ansprüchen 1 und 2, dadurch gekennzeichnet, daß sie als Polyolkomponente ein oleochemisches Polyol mit Restepoxidgruppen enthalten, welches eine OH-Zahl von 50 bis 200, insbesondere 65 bis 160, aufweist und welches durch partielle Ringöffnung von epoxydierten Triglyceriden eines wenigstens anteilsweise olefinisch ungesättigten Fettsäuren enthaltenden Fettsäuregemisches mit monofunktionellen Alkoholen mit 1-12 C-Atomen und/oder difunktionellen Alkoholen mit 2-8 C-Atomen hergestellt worden ist.

4. Polyurethan-Prepolymere nach den Ansprüchen 1-3, dadurch gekennzeichnet, daß sie aromatische Diisocyanate und Polyolkomponente in Mengen enthalten, die einem Ausgangsmolverhältnis OH : Isocyanatgruppen zwischen 1 : 4 und 1 : 11 entspricht.

5. Verfahren zur Herstellung der Polyurethan-Prepolymeren nach den Ansprüchen 1-4, dadurch gekennzeichnet, daß die aromatischen Isocyanate und die Polyolkomponente gewünschtenfalls in Gegenwart üblicher Katalysatoren bei Temperaturen zwischen 0 und 100 °C, vorzugsweise Raumtemperatur bis 50 °C, miteinander vermischt werden.

6. Verwendung der Polyurethan-Prepolymeren nach den Ansprüchen 1-4, gewünschtenfalls in Abmischung mit üblichen Beschleunigern, Verflüssigern, Treibmitteln, Farbstoffen, Stabilisatoren und/oder weiteren Hilfsstoffen als Ausgangsstoffe für Polyurethanschäume.

7. Ausgestaltung nach Anspruch 6, dadurch gekennzeichnet, daß man die Polyurethan-Prepolymere zusammen mit tertiären Aminen als Beschleunigern, mit Phosphor- und/oder Halogenatome enthaltenden Verbindungen wie Diphenylkresylphosphat, Tris-2-chlorethylphosphat, Tris-2-chlorpropylphosphat und Tris-2,3-dibrompropylphosphat als Verflüssigern und Chlor-Fluor-Kohlenwasserstoffen als Treibmitteln und gewünschtenfalls weiteren Hilfsstoffen zur Herstellung von feuchtigkeitshärtenden Einkomponenten-Polyurethanschäumen verwendet.

## Claims

1. Isocyanate-terminated polyurethane prepolymers
— synthesized from a stoichiometric excess of aromatic isocyanates containing on average from 2 to 4 isocyanate groups per molecule
— and a polyol component,

characterized in that they contain as polyol component
— oleochemical polyols
— which contain epoxide groups and
— which have a total functionality (OH and epoxide groups) of from 2.0 to 4.0 and
— which have been produced by the partial ring opening of epoxidized triglycerides of a fatty acid mixture containing at least partly olefinically unsaturated fatty acids with monohydric or polyhydric alcohols, a residual epoxide content of 1 to 4 % epoxide oxygen being maintained by termination of the reaction after a conversion of 20 to 80 mol-% of the epoxide groups by neutralization of the acidic catalyst and/or by removal of the alcohol used in excess by distillation.

2. Polyurethane prepolymers as claimed in claim 1, characterized in that they contain polynuclear aromatic isocyanates having a functionality of from 2.0 to 3.0 and more especially from 2.0 to 2.5 as the aromatic isocyanates.

3. Polyurethane prepolymers as claimed in claims 1 and 2, characterized in that they contain as polyol component an oleochemical polyol containing residual epoxide groups which has an OH value of from 50 to 200 and more especially from 65 to 160 and which has been produced by the partial ring opening of epoxidized triglycerides of a fatty acid mixture containing at least partly olefinically unsaturated fatty acids with monofunctional alcohols containing 1 to 12 carbon atoms and/or difunctional alcohols containing 2 to 8 carbon atoms.

4. Polyurethane prepolymers as claimed in claims 1 to 3, characterized in that they contain aromatic diisocyanates and polyol component in quantities corresponding to a starting molar ratio of OH to isocyanate groups of from 1 : 4 to 1 : 11.

5. A process for the production of the polyurethane prepolymers claimed in claims 1 to 4, characterized in that the aromatic isocyanates and the polyol component are mixed with one another, if desired in the presence of the usual catalysts, at temperatures in the range from 0 to 100 °C and preferably at temperatures in the range from room temperature to 50 °C.

6. The use of the polyurethane prepolymers claimed in claims 1 to 4, if desired in admixture with conventional accelerators, liquefying agents, blowing agents, dyes, stabilizers and/or other auxiliaries, as starting materials for polyurethane foams.

7. The use claimed in claim 6, characterized in that the polyurethane prepolymers are used together with tertiary amines as accelerators, with compounds containing phosphorus and/or halogen atoms, such as diphenyl cresyl phosphate, tris-2-chloroethyl phosphate, tris-2-chloropropyl phosphate and tris-2,3-dibromopropyl phosphate, as liquefying agents and fluorocarbons as blowing agents and, if desired, other auxiliaries for the production of moisture-hardening one-component polyurethane foams.

**Revendications**

1. Prépolymères de polyuréthane avec des groupes isocyanate en fin de chaîne
— formés sur la base d'un excédent stoechiométrique d'isocyanates aromatiques avec, en moyenne, 2 à 4 groupes isocyanate par molécule
— et d'un composant polyol
caractérisés en ce que, comme composant polyol,
— ils contiennent des polyols oléochimiques,
— ils contiennent les groupes époxy et
— leur fonctionnalité totale (groupes OH et époxy) se situe dans l'intervalle de 2,0 à 4,0 et
— ils ont été fabriqués par ouverture partielle des cycles de triglycérides époxydés d'un mélange d'acides gras contenant des acides gras au moins partiellement insaturés, de type oléfinique, avec des monoalcools ou des polyalcools, avec maintien d'une teneur restante d'époxy de 1 à 4 % en poids de l'oxygène époxy, dans lequel la réaction est interrompue par neutralisation du catalyseur acide et/ou par élimination par distillation de l'alcool excédentaire après une réaction de 20 à 80 % molaires des groupes époxy.

2. Prépolymères de polyuréthane selon la revendication 1, caractérisés en ce qu'ils contiennent, comme isocyanates aromatiques, des isocyanates aromatiques plurinucléaires avec une fonctionnalité de 2,0 à 3,0, en particulier de 2,0 à 2,5.

3. Prépolymères de polyuréthane selon les revendications 1 et 2, caractérisés en ce qu'ils contiennent, comme composants polyol, un polyol oléochimique avec des groupes époxy restants qui présente un indice OH situé dans l'intervalle de 50 à 200, de préférence dans l'intervalle de 65 à 160 et qui a été fabriqué par ouverture de cycle partielle de triglycérides époxydées d'un mélange d'acides gras contenant des acides gras au moins partiellement insaturés, de type oléfinique, avec des mono-alcools avec 1 à 12 atomes de carbone et/ou des dialcools avec 2 à 8 atomes de carbone.

4. Prépolymères de polyuréthane selon les revendications 1 à 3, caractérisés en ce qu'ils contiennent des diisocyanates aromatiques et des composants polyol dans des quantités telles que le rapport de départ entre OH et les groupes isocyanate se situe entre 1 : 4 et 1 : 11.

5. Procédé de fabrication des prépolymères de polyuréthane selon les revendications 1 à 4, caractérisé en ce que les isocyanates aromatiques et les composants polyol sont mélangés entre eux, au besoin en présence de catalyseurs usuels, à des températures situées dans l'intervalle de 0 à 100 °C, de préférence à température ambiante jusqu'à 50 °C.

6. Utilisation des prépolymères de polyuréthane selon les revendications 1 à 4, le cas échéant mélangés avec des accélérateurs, liquéfacteurs, agents propulseurs, colorants, stabilisateurs et/ou d'autres produits auxiliaires usuels comme produits de départ pour la fabrication de mousses de polyuréthane.

7. Préparation selon la revendication 6, caractérisée en ce qu'on utilise les prépolymères de polyuréthane en combinaison avec des amines tertiaires, en tant qu'accélérateurs, avec des composés contenant des atomes de phosphore et/ou d'halogène tels que le diphénylcrésylphosphate, le tris-2-chloroéthylphosphate, le tris-2-chloropropylphosphate et le tris-2,3-dibromopropylphosphate, en tant que liquéfacteurs, et avec des chloro-fluoro-hydrocarbures, en tant qu'agents propulseurs, et au besoin avec d'autres produits auxiliaires, pour la fabrication de mousses de polyuréthane à un composant durcissant au contact de l'humidité.